# EUROPEAN PATENT APPLICATION

(11) **EP 2 355 306 A2**
(43) Date of publication of application: **10.08.2011**
(21) Application number: 11000002.3
(22) Date of filing: 03.01.2011
(51) Int. Cl.: H02K 1/27

(54) **Permanent magnet type rotary electric machine**

(30) Priority: 07.01.2010 JP 2010001700
(71) Applicant: Hitachi, Ltd., Chiyoda-ku Tokyo (JP)
(72) Inventor: Hori, Masahiro, Chiyoda-ku Tokyo 100-8220 (JP); Kori, Daisuke, Chiyoda-ku Tokyo 100-8220 (JP); Komura, Akiyoshi, Chiyoda-ku Tokyo 100-8220 (JP); Kanazawa, Hiroshi, Chiyoda-ku Tokyo 100-8220 (JP); Masuda, Seikichi, Chiyoda-ku Tokyo 100-8220 (JP); Kimura, Mamoru, Chiyoda-ku Tokyo 100-8220 (JP); Obata, Nobuhiko, Chiyoda-ku Tokyo 100-8220 (JP)
(74) Representative: Beetz & Partner

(57) **Abstract**

A rotary electric machine, wherein the rotation direction of a rotor (1) is a defined direction, a groove (10, 29 - 34, 61) is provided in a rotor core (5) on the radial outside with respect to permanent magnets (7 and 8), and the groove (10, 29 - 34, 61) is provided in a position inclined from the centerline (11) between the permanent magnets (7 and 8) within a magnetic pole head and at the same time in a position excluding an end portion of a permanent magnet insertion hole on the radial outside, in order to enable a reduction in a no-load induced electromotive force and prevention of a decrease in output.

## Description

### Field of The Invention

The present invention relates to a permanent magnet type rotary electric machine, and is particularly suitable for a rotary electric machine constant in the rotation direction. In addition, the present invention relates to a vehicle and a power generating system suitable for mounting the permanent magnet type rotary electric machine thereon.

### Description of Related Art

Recently, the permanent magnet type rotary electric machine is applied to more and more wide field of application as a high-efficiency rotary electric machine, which is capable of reducing copper loss caused by rotor winding in comparison with an induction motor, and is expected to be applied to a compressor for an air conditioner or for a refrigerator, a motor for automobile, a hybrid railway vehicle, a large generator, and the like.

Here, as a conventional permanent magnet type rotary electric machine, there is a machine disclosed in JP-A-2008-29095 or JP-A-2001-286110, for example. In JP-A-2008-29095, asymmetric grooves are provided at end portions of magnetic poles in the outer circumference of a rotor, and magnetic steel sheets of the rotor are stacked so that the asymmetric grooves are shifted in a stepwise manner in the axial direction (skew structure). Moreover, in JP-A-2001-286110, a groove is provided in the central part on the radial outside between permanent magnets on the outer circumference of a rotor which is the radial outside of the permanent magnets provided in the rotor.

When the permanent magnet type rotary electric machine is used, however, there is a problem of generation of no-load induced electromotive force. Here, description will be made on the problem caused by the generation of the no-load induced electromotive force. In the case of the permanent magnet type rotary electric machine, a magnetic field is generated without application of a load and therefore electromagnetic induction generates a voltage (no-load induced electromotive force) along with rotations of a rotor. This no-load induced electromotive force is in proportion to the number of rotations of the rotor. Therefore, if abnormal rotations of the rotor, if occurs, causes an excessive speed relative to a permissible speed, a no-load induced electromotive force exceeding a specified value is generated, which thereby causes a flow of abnormal current or a failure of a control inverter or the like. Therefore, if the permanent magnet type rotary electric machine is used, it is necessary to reduce the no-load induced electromotive force.

According to the details described in JP-A-2008-29095, however, the groove is formed at the end portion of the magnetic pole and the end portion of the magnetic pole is not the main path of the magnetic flux of the permanent magnet in no-load condition. Therefore, magnetic resistance hardly increases even if the groove is provided at the end portion of the magnetic pole, by which it is difficult to effectively reduce the no-load induced electromotive force.

Moreover, according to the details described in JP-A-2001-286110, the groove is provided in the central part between the magnetic poles, a groove having a large magnetic resistance is provided in the main path of the magnetic flux of the permanent magnet, and therefore it is possible to reduce the no-load induced electromotive force. It, however, is likely to lead to a decrease in output. Thus, it is difficult to reduce the no-load induced electromotive force and at the same time to prevent the decrease in output.

### Brief Summary of the Invention

Therefore, it is an object of the present invention to provide a permanent magnet type rotary electric machine capable of reducing a no-load induced electromotive force and at the same time preventing a decrease in output as much as possible.

To solve the above problem, there is provided, according to the present invention, a rotary electric machine wherein the rotation direction of a rotor is a defined direction, a groove or gap is provided on the radial outside of permanent magnets in a rotor core, and the groove or gap is provided in a position inclined from the centerline between the permanent magnets within a magnetic pole head and at the same time in a position excluding the radial outside of an end portion of a permanent magnet insertion hole.

According to the present invention, it is possible to provide a permanent magnet type rotary electric machine capable of reducing a no-load induced electromotive force and further preventing a decrease in output.

Other objects, features and advantages of the invention will become apparent from the following description of the embodiments of the invention taken in conjunction with the accompanying drawings.

### Brief Description of the Several Views of the Drawing

Fig. 1 is a diagram illustrating the entire rotary electric machine according to Embodiment 1 of the present invention;
Fig. 2 is a diagram illustrating a cross section taken along line II-II of Fig. 1;
Fig. 3 is a diagram illustrating a rotor in Embodiment 1;
Fig. 4 is a diagram for specifying the position of a groove in Embodiment 1;
Fig. 5 is a flux line diagram in no-load condition in the vicinity of a rotor and a stator in the case of the absence of the groove;
Fig. 6 is a flux line diagram in no-load condition in the vicinity of a rotor and a stator in the case of the presence of the groove;
Fig. 7 is a flux line diagram in a load condition in the vicinity of the rotor and the stator in the case of the absence of the groove;
Fig. 8 is a flux line diagram in a load condition in the vicinity of the rotor and the stator in the case of the presence of the groove;
Fig. 9 is a diagram illustrating changes in output in the case of changing the depth of the groove relative to the outside diameter of the rotor;
Fig. 10 is a diagram illustrating changes in output in the case of changing θ₁;
Fig. 11 is a diagram illustrating changes in output in the case of changing θ₂;
Fig. 12 is a diagram for describing torque pulsation caused by the groove;
Fig. 13 is a diagram for describing torque pulsation caused by the groove;
Fig. 14 is a diagram for describing a condition for changing the position of the groove relative to slots of the stator;
Fig. 15 is a diagram illustrating a displacement of torque pulsation caused by permanent magnets;
Fig. 16 is a diagram illustrating changes in the first peak value of the torque pulsation caused by the groove when the position of the groove is changed relative to the slots of the stator;
Fig. 17 is a radial partial cross-sectional view of a rotor according to Embodiment 2 of the present invention;
Fig. 18 is a radial partial cross-sectional view of a rotor according to Embodiment 3 of the present invention;
Fig. 19 is a radial partial cross-sectional view of a rotor according to Embodiment 4 of the present invention;
Fig. 20 is a radial partial cross-sectional view of a rotor according to Embodiment 5 of the present invention;
Fig. 21 is a radial partial cross-sectional view of a rotor according to Embodiment 6 of the present invention;
Fig. 22 is a radial partial cross-sectional view of a rotor according to Embodiment 6;
Fig. 23 is a radial partial cross-sectional view of a rotor according to Embodiment 6;
Fig. 24 is a radial partial cross-sectional view of a rotor according to Embodiment 6;
Fig. 25 is a radial partial cross-sectional view of a rotor according to Embodiment 6;
Fig. 26 is a radial partial cross-sectional view of a rotor according to Embodiment 7 of the present invention;
Fig. 27 is a radial partial cross-sectional view of a rotor according to Embodiment 7;
Fig. 28 is a radial partial cross-sectional view of a rotor according to Embodiment 7;
Fig. 29 is a radial partial cross-sectional view of a rotor according to Embodiment 8 of the present invention;
Fig. 30 is a radial partial cross-sectional view of a rotor according to Embodiment 9 of the present invention;
Fig. 31 is a radial partial cross-sectional view of a rotor according to Embodiment 10 of the present invention;
Fig. 32 is a radial partial cross-sectional view of a rotor according to Embodiment 11 of the present invention;
Fig. 33 is an axial sectional view of a rotary electric machine according to Embodiment 11;
Fig. 34 is a diagram illustrating a rotor in Embodiment 12 of the present invention;
Fig. 35 is a diagram illustrating a state in which a guide is inserted into a groove with respect to Embodiment 13 of the present invention;
Fig. 36 is a diagram schematically illustrating an electric system of an electric train according to Embodiment 14 of the present invention;
Fig. 37 is a diagram schematically illustrating a state of a wind-power generation according to Embodiment 15 of the present invention; and
Fig. 38 is a radial partial cross-sectional view of a rotor for describing a state in which the groove is applied to a motor.

### Detailed Description of The Invention

The preferred embodiments of the present invention will now be described in detail hereinafter.

### [Embodiment 1]

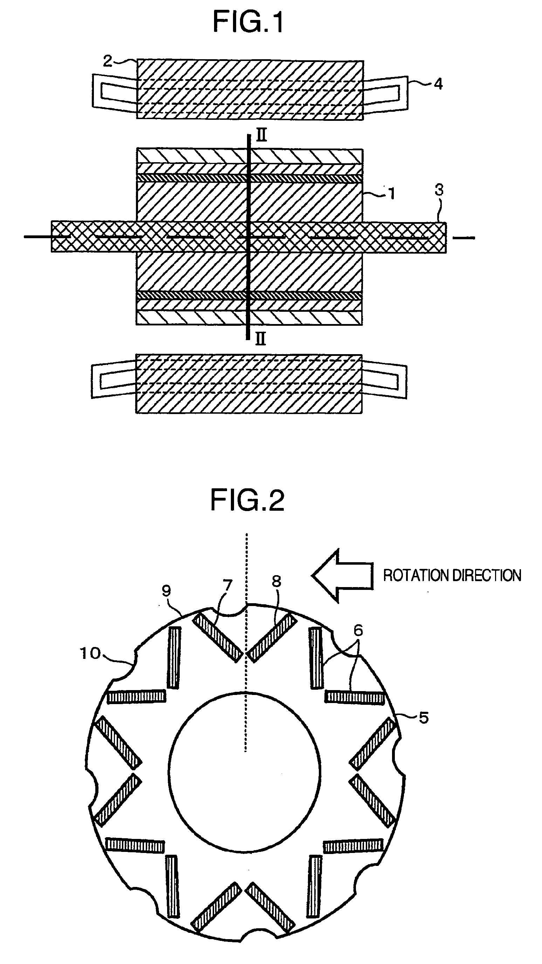

Embodiment 1 of a permanent magnet type electric generator according to the present invention will be described below with reference to Figs. 1 to 16 and Table 1. The permanent magnet type electric generator in this embodiment mainly includes a rotor 1 having a permanent magnet, a rotating shaft 3 arranged in the rotor 1 and concentrically with the rotor and a stator 2 having a stator winding 4, which is arranged on the radial outside of the rotor 1 so as to be opposed to the rotor 1 and passes through the stator 2 in the axial direction.

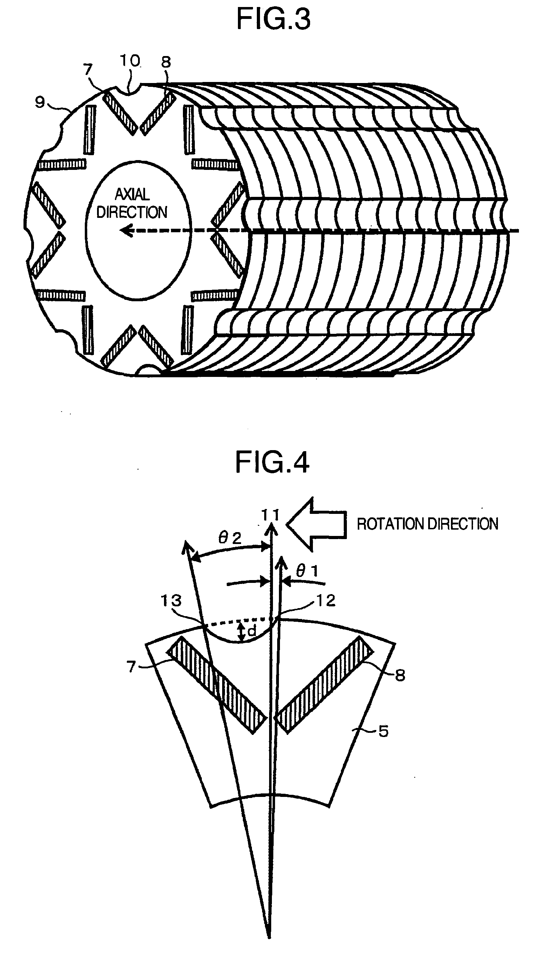

The rotor 1 is formed by stacking rotor cores 5 uniformly in the axial direction, where the rotor cores 5 are made of magnetic steel sheets having the same shape. As shown in Fig. 2, the permanent magnet type electric generator in this embodiment is provided with permanent magnet insertion holes 6 so as to form a V shape for each magnetic pole head when viewed from the shaft center of the rotor 1, and permanent magnets 7 and 8 are inserted in the permanent magnet insertion holes 6. Further, in this embodiment, an arcuate groove 10 is provided in a rotor outer circumference 9 on the radial outside of the pair of permanent magnets 7 and 8 which form the V shape, so that the groove 10 is deflected toward the rotation direction relative to the line passing through the middle between the pair of permanent magnets 7 and 8 which form the V shape from the shaft center of the rotor 1. In addition, as shown in Fig. 3, the rotor 1 is formed by arranging the rotor cores 5 uniformly in the axial direction without reversing or shifting the rotor cores 5.

The foregoing groove 10 will be described below. As shown in Fig. 4, the groove 10 is provided in a position, which is inclined toward the rotation direction relative to the centerline 11 of the pair of permanent magnets forming the V shape extending from the shaft center of the rotor 1, and at the same time in a position excluding the radial outside of the end portion of the permanent magnet insertion hole so as to have a depth d. Here, assuming that θ₁ is an angle formed by an end portion 12 of the groove 10 on the opposite side of the rotation direction and the centerline 11 between the pair of permanent magnets 7 and 8 within the magnetic pole head and that θ₂ is an angle formed by an end portion 13 of the groove 10 on the rotation direction side and the centerline 11 between the pair of permanent magnets 7 and 8 within the magnetic pole head, θ₁<θ₂ is satisfied since the groove 10 is provided in the position shifted toward the rotation direction. Here, the positive direction for θ₁ is assumed to be the direction opposite to the rotation direction relative to the centerline 11 between the pair of permanent magnets 7 and 8 and the positive direction for θ₂ is assumed to be the same direction as the rotation direction relative to the centerline 11 between the pair of permanent magnets 7 and 8 to determine the angles θ₁ and θ₂.

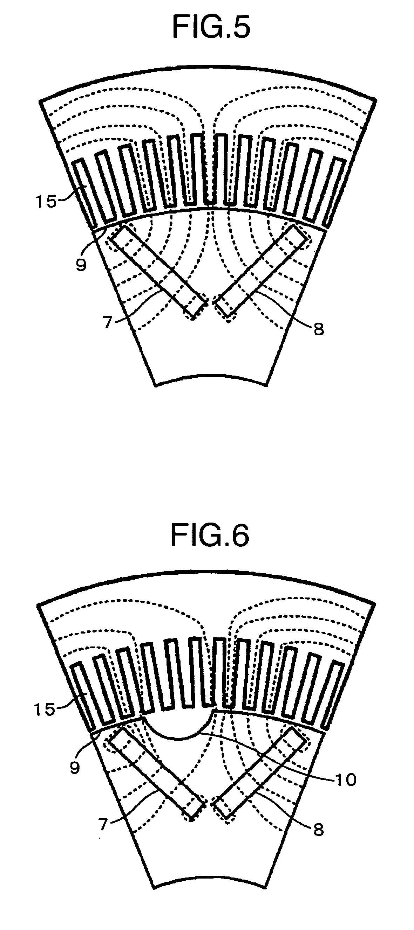

A magnetic field generated during operation of the rotary electric machine in no-load condition will be described with reference to Figs. 5 and 6. According to Figs. 5 and 6, it is understood that the number of lines of flux passing between the rotor and the stator slots is decreased when the groove 10 is provided in comparison with the case where the groove 10 is not provided. Therefore, the groove 10 is able to block the magnetic field generated by the permanent magnets in no-load condition and thereby to reduce a no-load induced electromotive force.

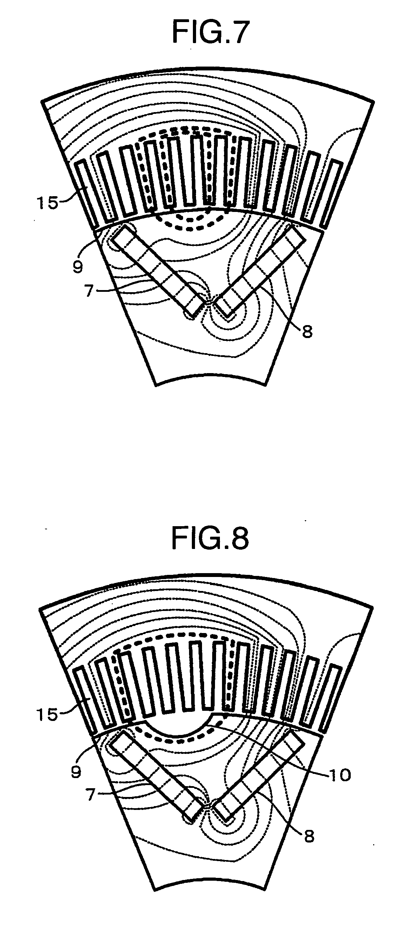

Subsequently, a magnetic field generated during generating operation of the rotary electric machine in a load condition will be described with reference to Figs. 7 and 8. According to Figs. 7 and 8, the lines of flux move to the opposite side of the rotation direction of the rotor while passing between the rotor and the stator. Therefore, it is understood that the number of lines of flux passing between the rotor and the stator does not change even in comparison between the case where the groove 10 is provided on the opposite side of the rotation direction of the rotor and the case where the groove 10 is not provided on the opposite side, and therefore no decrease in output occurs. Therefore, even if the groove is provided on the forward side of the rotation direction which is low in the magnetic flux density, it does not block the magnetic field generated by the permanent magnets and therefore does not lead to a decrease in output.

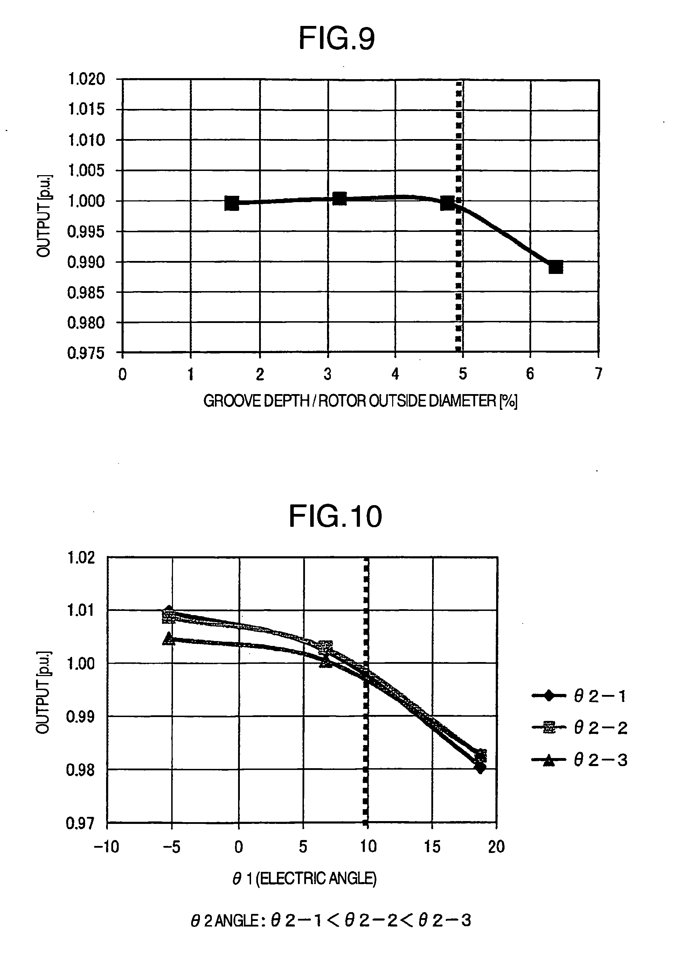

The following discusses the depth d of the groove 10 relative to the radial distance from the shaft center of the rotor to the rotor outer circumference. Fig. 9 shows a plot of changes in output observed when the depth d is varied assuming that the output obtained when the groove 10 is not arranged is normalized to 1. As shown in this diagram, it is understood that the output decreases when the depth d of the groove 10 is equal to or more than 5% relative to the radial distance from the shaft center of the rotor to the rotor outer circumference. In other words, it is possible to prevent a decrease in output as much as possible while reducing the no-load induced electromotive force by providing the groove 10, but particularly if the depth d of the groove 10 is less than 5% relative to the radial distance from the shaft center of the rotor to the rotor outer circumference, it is possible to reduce the no-load induced electromotive force without a decrease in output.

Subsequently, the arranged position of the groove 10 will be discussed focusing on the angles θ₁ and θ₂. Fig. 10 shows a plot of changes in output observed when the angle θ₁ is varied. Also in this case, the output obtained when the groove 10 is not arranged is normalized to 1. Moreover, in Fig. 10, the effects on the angle θ₁ are examined by giving three different angles to the angle θ₂ as well as the angle θ₁. Here, the angle of θ₂ satisfies θ₂₋₁<θ₂₋₂<θ₂₋₃. Thus, it is understood that the angle θ₁ does not depend on the angle θ₂, but the output decreases if the angle θ₁ exceeds 10°. In other words, it is possible to prevent a decrease in output as much as possible while reducing the no-load induced electromotive force by providing the groove 10, and particularly if the angle θ₁ is less than 10°, it is possible to reduce the no-load induced electromotive force without a decrease in output.

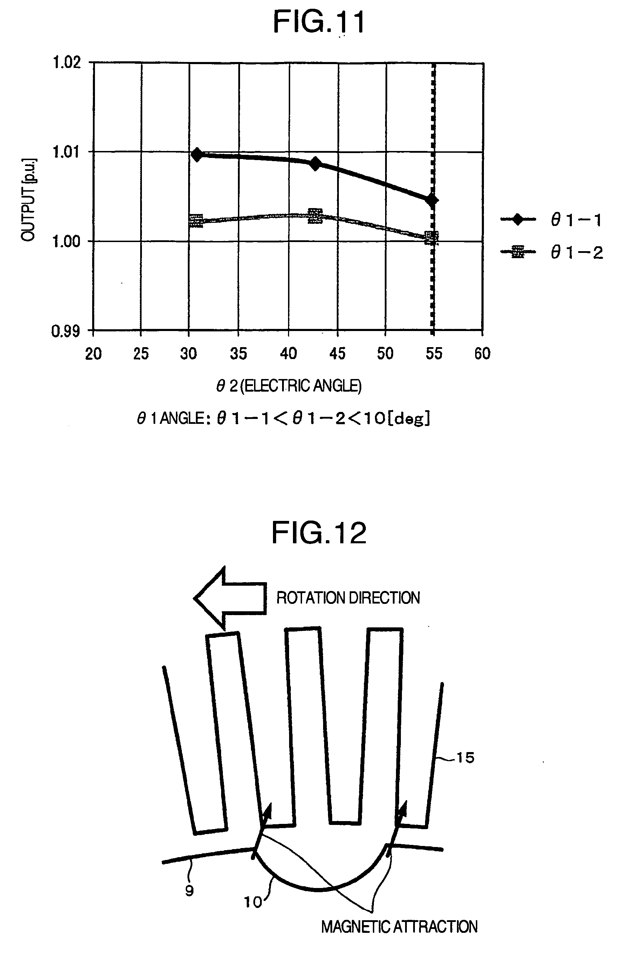

Fig. 11 shows a plot of changes in output observed when the angle θ₂ is varied. Also in this case, the output obtained when the groove 10 is not arranged is normalized to 1. Moreover, in Fig. 11, the effects on the angle θ₂ are examined by giving two different angles to the angle θ₁ as well as the angle θ₂. Here, the angle of θ₁ satisfies θ₁₋₁<θ₁₋₂<10°. Thus, it is understood that the angle θ₂ exceeding 55° could lead to a decrease in output. As shown in Fig. 11, it is possible to prevent a decrease in output as much as possible while reducing the no-load induced electromotive force by providing the groove 10, and particularly if the angle θ₂ is less than 55°, it is possible to reduce the no-load induced electromotive force while increasing the output very advantageously.

As described above, according to the permanent magnet type electric generator of this embodiment, it is possible to prevent a decrease in output as much as possible while reducing the no-load induced electromotive force. In addition, the permanent magnet type electric generator of this embodiment enables a reduction in torque pulsation caused by a magnetic force of the permanent magnets, and therefore this issue will be described hereinbelow. The torque pulsation caused by the magnetic force of the permanent magnets here means a phenomenon that the position of a slot provided in a rotor core or a stator core opposed to a permanent magnet used for the rotor or the stator relatively changes along with the rotations of the rotor to the permanent magnet, thereby changing a magnetic resistance between the permanent magnet and the slot, by which vibration occurs. The vibration causes noise at driving the rotary electric machine and, if a change gear is connected to the rotary electric machine, the vibration could lead to a reduction in gear life.

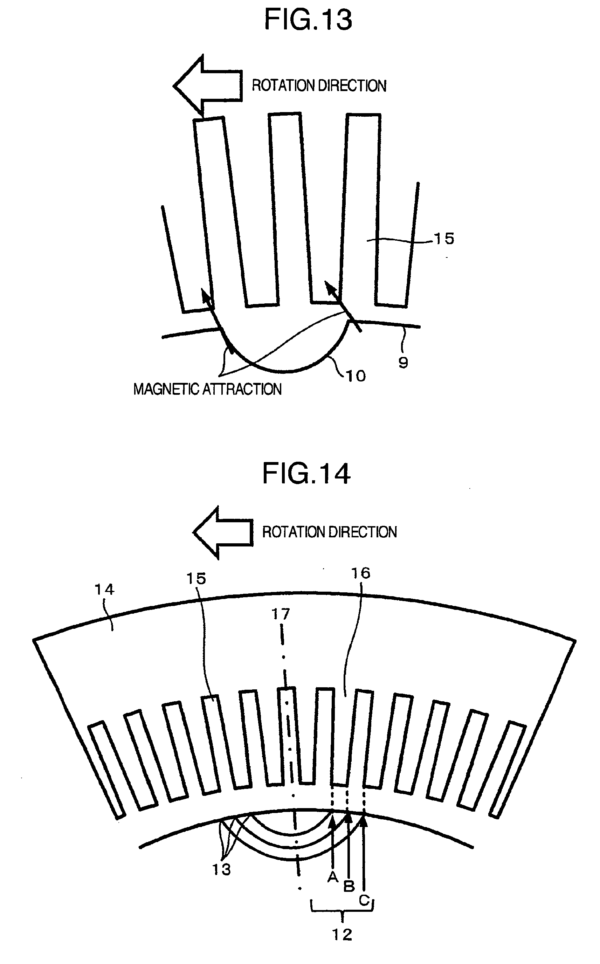

In the permanent magnet type electric generator according to this embodiment, the groove 10 is provided in the rotor outer circumference as has been described. As a result, torque pulsation caused by the presence of the groove 10 occurs in addition to the foregoing torque pulsation caused by the magnetic force of the permanent magnets. The principle is as described below. The provision of the groove in the rotor periodically changes the magnetic resistance on the rotor side along with the rotations when viewed from the stator side. Thereby, a portion through which a magnetic flux easily passes and a portion through which a magnetic flux passes with difficulty are periodically repeated and therefore, as shown in Fig 12 and Fig. 13, positive and negative torques occur repeatedly along with the rotations. This is the torque pulsation caused by the presence of the groove 10.

In addition, principles of generation differ between the two different types of torque pulsations: i) torque pulsation caused by the magnetic force of the permanent magnets; and ii) torque pulsation caused by the presence of the groove 10. Therefore, the torque pulsations vibrate with different amplitudes and different phases independent of each other. In other words, it is possible to cancel the torque pulsation of i) which inevitably occurs in the case of using permanent magnets by forming a state of superposed vibrations which are ideally the same in amplitude as each other and opposite in phase to each other.

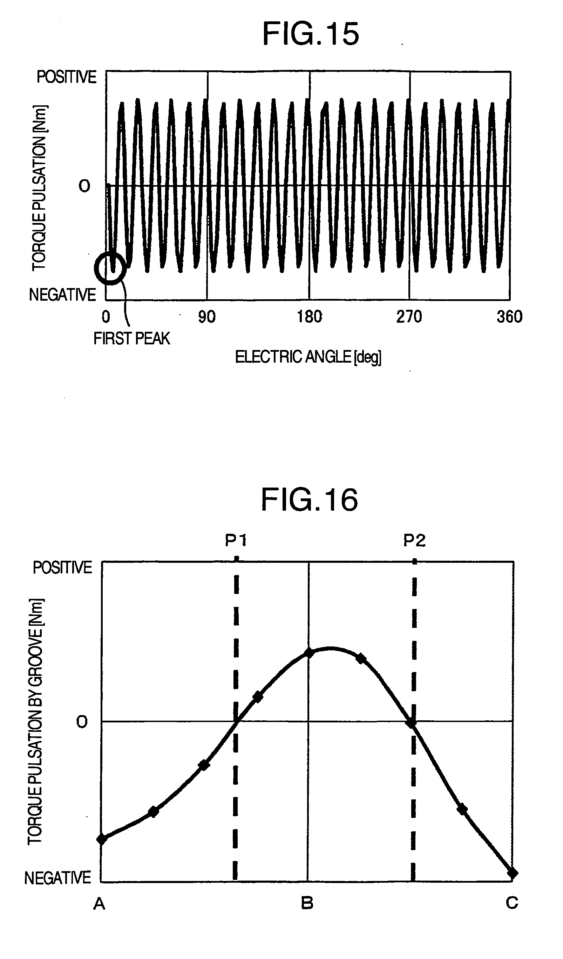

Hereinafter, a method of suppressing torque pulsation of i) will be described with reference to Fig. 14 to Fig. 16. Fig. 14 shows an enlarged part where the rotor 1 and the stator 2 are opposed to each other, and there are formed stator slots 15 and stator teeth 16 for use in winding the stator winding 4 in the stator core 14 on the stator 2 side. In the groove 10 provided on the rotor core 5 side, there are shown three-stage positions at A, B, and C with respect to the positions of the end portion 13 on the rotation direction side and the end portion 12 on the opposite side of the rotation direction with respect to the line 17 connecting the rotating center and the center of the groove as a symmetry axis. Here, the position A represents an end in the rotation direction of the stator tooth 16, the position B represents an end in the counter-rotation direction of the stator tooth 16, and the position C represents an end in the rotation direction adjacent to the position A among the ends in the rotation direction of the stator teeth 16. Fig. 15 shows the torque pulsation caused by a magnetic force of the permanent magnets of i), and Fig. 16 shows a diagram plotting the first peak value in the torque pulsation caused by the presence of the groove 10 of ii) in the case of varying the position of the end portion of the groove 10. Specifically, if the torque pulsation caused by the magnetic force of the permanent magnets of i) first shows a negative peak value, it is preferable to provide the end portion in a position between P1 and P2 in Fig. 16 in which the torque pulsation caused by the presence of the groove 10 of ii) first shows a positive peak value, and particularly if it is required to set a large amplitude to be canceled, it is preferable to provide the end portion close to the position B. In this manner, if the torque pulsation caused by the magnetic force of the permanent magnets of i) first shows a positive peak value, the position of the end portion of the groove 10 is adjusted so that the torque pulsation caused by the presence of the groove 10 of ii) first shows a negative peak value, and if the torque pulsation caused by the magnetic force of the permanent magnets of i) first shows a negative peak value, the position of the end portion of the groove 10 is adjusted so that the torque pulsation caused by the presence of the groove 10 of ii) first shows a positive peak value, thereby enabling the torque pulsation of i) to be weakened. Moreover, when the positive or negative peak value is taken, the position of the end portion of the groove 10 is adjusted so that the absolute value of the amplitude is equal to or close to the absolute value of the amplitude of the torque pulsation of i), thereby enabling the torque pulsation of i) to be further weakened.
Table 1 lists the values of the output, the no-load induced electromotive force, and the torque pulsation of i) shown by the permanent magnet type electric generator when the optimal values are taken with respect to the depth, position, and the like of the foregoing groove 10, assuming that each value for a case where the groove 10 is not provided is normalized to 1.

**[Table 1]**

| | Groove absent | Groove present |
|---|---|---|
| Output [p.u.] | 1.00 | 1.01 |
| No-load induced electromotive force [p.u.] | 1.00 | 0.87 |
| Cogging torque [p.u.] | 1.00 | 0.59 |

As apparent from Table 1, the output does not decrease, rather slightly increases, and the no-load induced electromotive force and the torque pulsation are remarkably reduced.

Further effects of providing the groove 10 are as follows: it is possible to decrease the weight of the rotor core 5 by providing the groove 10, to decrease peak stress applied to the rotor core 5 due to a centrifugal force during rotation, and further to improve the strength of the permanent magnet type electric generator.

Moreover, although the rotor core is able to be expanded or contracted only in the radial direction when the groove 10 is absent, the provision of the groove 10 enables the expansion and contraction of the rotor core in the left-right direction according to the groove 10. This reduces the concentrated stress applied to the rotor core 5 due to the centrifugal force of the permanent magnet, thereby increasing the strength.

Although this embodiment has been described for a case of the rotary electric machine having eight poles as the number of magnetic poles as shown in Fig. 2, Fig. 3, and the like, it goes without saying that the present invention is applicable to any other number of poles.

In this embodiment, the rotor 1 is formed by uniformly arranging the rotor cores 5 in the axial direction. Therefore, there is no need to stack the rotor cores, for example, with the rotor cores reversed or rotated, thereby enabling a reduction in the manufacturing cost.

Moreover, in this embodiment, the provision of the groove 10 enables a reduction in weight of the rotor and therefore enables a reduction in weight of the entire rotary electric machine. Further, under the condition where the output can be improved in this embodiment, a more compact rotary electric machine is able to achieve predetermined output and therefore it is possible to downsize the entire rotary electric machine. In other words, it is possible to reduce the weight also from the viewpoint of downsizing.

Moreover, in this embodiment, the rotation direction of the rotor 1 is required to be a determinate direction. It is because, if the rotation is reversed, the position of the groove 10 is located on the opposite side to the rotation direction, which makes it difficult to reduce the no-load induced electromotive force without a decrease in output.

Moreover, it is desirable, from the viewpoint of the manufacturing cost, to provide the groove 10 deflected toward the rotation direction with respect to all of the stacked rotor cores 5 and to form it uniformly in the same shape over the rotor covers in the axial direction so that the effect of reducing the no-load induced electromotive force is enhanced and only one type of rotor cores 5 need to be manufactured. If, however, the position of the groove 10 as the total sum in the circumferential and axial directions is deflected toward the rotation direction from the opposite side to the rotation direction, for example, by providing the groove 10 deflected toward the rotation direction with respect to at least a part of rotor cores 5, it is possible to achieve the advantageous effect of reducing the no-load induced electromotive force while preventing a decrease in output.

### [Embodiment 2]

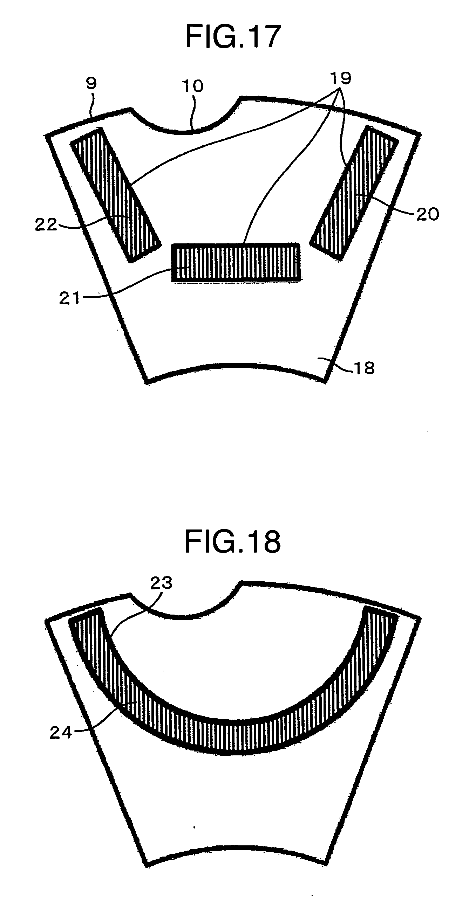

Embodiment 2 will be described below with reference to Fig. 17. The permanent magnet insertion holes 6 are provided so as to form a V shape when viewed from the shaft center of the rotor 1 in Embodiment 1, whereas in this embodiment the permanent magnet insertion holes 19 in the V-shaped condition are separated farther from each other viewed from the shaft center of the rotor 1 and another permanent magnet insertion hole is provided in the central portion between the permanent magnet insertion holes. In addition, permanent magnets 20, 21, 22 are inserted into the permanent magnet insertion holes 19. Also in this case, it is possible to achieve the same effects as those described in Embodiment 1 under the same conditions as Embodiment 1 with respect to the groove 10.

Although this embodiment has three permanent magnet insertion holes 19, in which two under the V-shaped condition are separated from each other viewed from the shaft center of the rotor 1 and another permanent magnet insertion hole is provided in the central portion therebetween, it is possible to provide four or more permanent magnet insertion holes.

### [Embodiment 3]

Embodiment 3 will be described below with reference to Fig. 18. In Embodiment 2, the permanent magnet insertion holes 19 under the V-shaped condition are separated from each other viewed from the shaft center of the rotor 1 and another permanent magnet insertion hole is provided in the central portion therebetween, whereas in this embodiment there is provided a permanent magnet insertion hole 23 which is continuous under a U-shaped condition when viewed from the shaft center of the rotor 1. It is also possible to insert a permanent magnet 24 into the permanent magnet insertion hole 23. Other features are the same as those of Embodiment 2 and therefore the details are omitted here.

### [Embodiment 4]

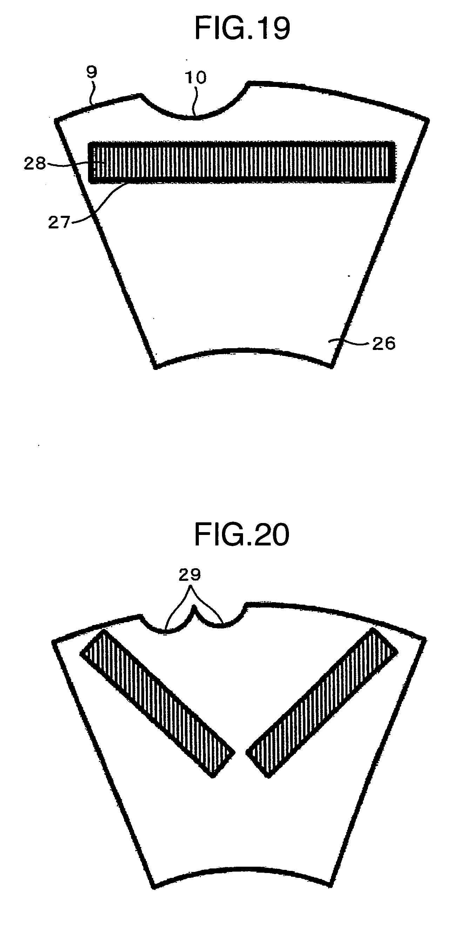

Embodiment 4 will be described below with reference to Fig. 19. In this embodiment, a permanent magnet 28 insertion hole 27 is formed in a straight line and a permanent magnet is inserted into the permanent magnet insertion hole 27. Also with the use of this configuration, it is possible to achieve the same effects as those described in Embodiment 1 under the same conditions as Embodiment 1 with respect to the groove 10.

### [Embodiment 5]

Embodiment 5 will be described below with reference to Fig. 20. In this embodiment, two grooves 29 formed by dividing the groove 10 in Embodiment 1 are provided so as to be inclined toward the rotation direction relative to the line passing through the middle between the pair of permanent magnets 7 and 8 constituting a V shape from the shaft center of the rotor 1. It is possible to achieve the same effects, independently of whether one groove or a plurality of grooves, under the same conditions as described in Embodiment 1.

### [Embodiment 6]

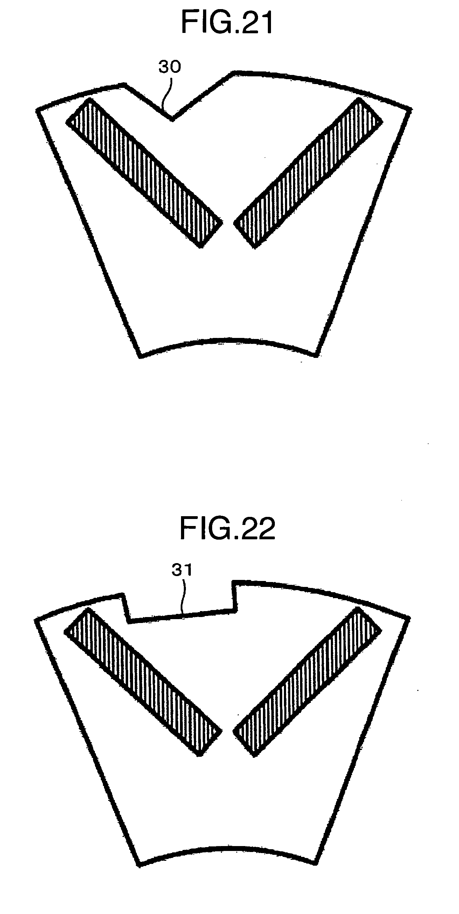

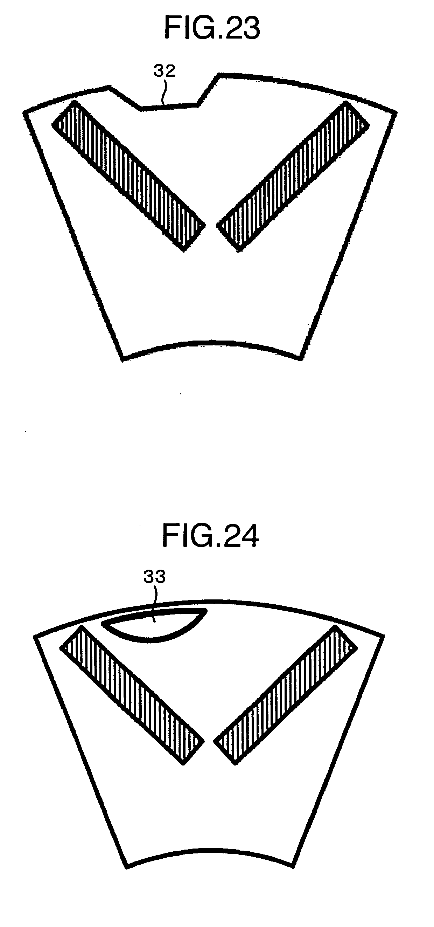

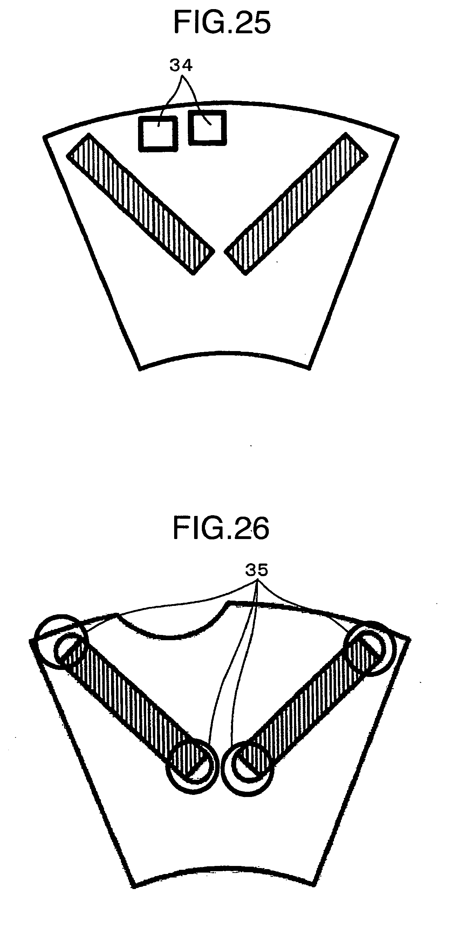

Embodiment 6 will be described below with reference to Fig. 21. In this embodiment, a groove 30 is formed in a substantially triangular shape. The shape of the groove may be, for example, a groove 31, 32 of a substantially rectangular shape as shown in Figs. 22 and 23 besides the above. It is also possible to form an arcuate gap 33 formed in the axial direction inside the rotor core, instead of the groove, as shown in Fig. 24. The radial cross-sectional shape of the gap is not limited to the arcuate shape, but it is also possible to use the shapes as described in the above Embodiments 2 to 5. In addition, as shown in Fig. 25, it is possible to provide a plurality of gaps 34.

### [Embodiment 7]

Embodiment 7 will be described below with reference to Fig. 26. Although any gap is not provided in the permanent magnet insertion hole in the above embodiments, an end portion 35 of the magnet insertion hole is formed in an arcuate shape in this embodiment. In this case, a gap exists in the permanent magnet insertion hole. Even if the gap exists in the permanent magnet insertion hole, it is possible to achieve the same effects by adopting the configuration described in the above embodiments.

Further, the effects of forming the end portion of the permanent magnet insertion hole into an arcuate shape are as follows: If the end portion of the permanent magnet insertion hole is flat, stress concentrates at the corner of the permanent magnet insertion hole, which may cause damage. However, the end portion is made to be arcuate, so as to avoid a damage risk. Further, although the permanent magnet insertion holes 6 are provided so as to be each arcuate and to form a V shape when viewed from the shaft center of the rotor 1 in Fig. 26, it is also possible to form the permanent magnet insertion holes in any shape other than the V shape as described in the above embodiments.

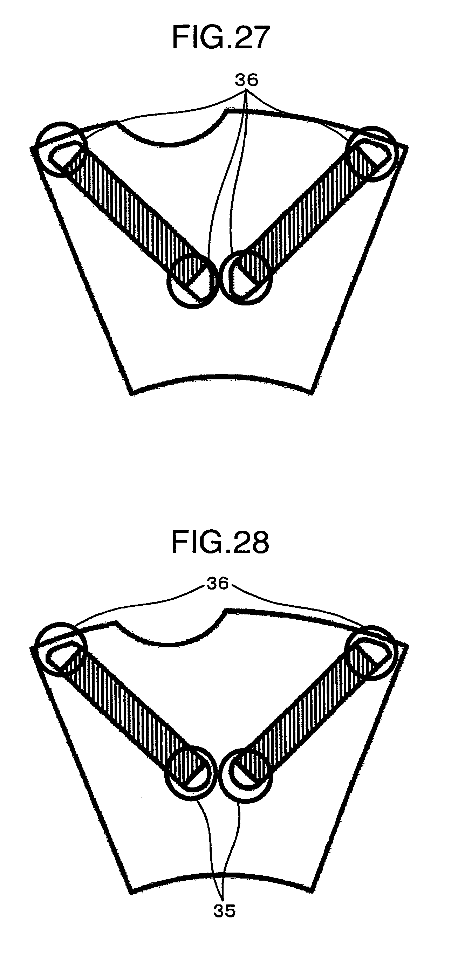

Moreover, although the description has been made on only an example that the end portion 36 is formed in the arcuate shape in this embodiment, besides, it is very useful to form the rotor outer circumference and the end portions 36 on the radial outsides of the permanent magnet insertion holes so as to be substantially parallel to each other, for example, as shown in Fig. 27 and Fig. 28. This is based on the following fact: Though the arcuate end portion can relieve the stress concentration at the corner of the permanent magnet insertion hole, another stress concentration occurs in the vicinity of the radial most outside portion within the arcuate portion. On the contrary, when the rotor outer circumference and the end portions 36 on the radial outsides of the permanent magnet insertion holes are formed so as to be substantially parallel to each other, it is possible to relieve the stress concentration in the vicinity of the radial most outside portion within the arcuate portion. Additionally, it is also possible to employ other configurations for relieving stress concentration, as well as a case in which a type that the rotor outer circumference and the end portions 36 on the radial outsides of the permanent magnet insertion holes are formed so as to be substantially parallel to each other and another type that the end portions are formed each in an arcuate shape are mixed depending on the rotation direction or counter-rotation direction, and further depending on the radial outside or inside.

### [Embodiment 8]

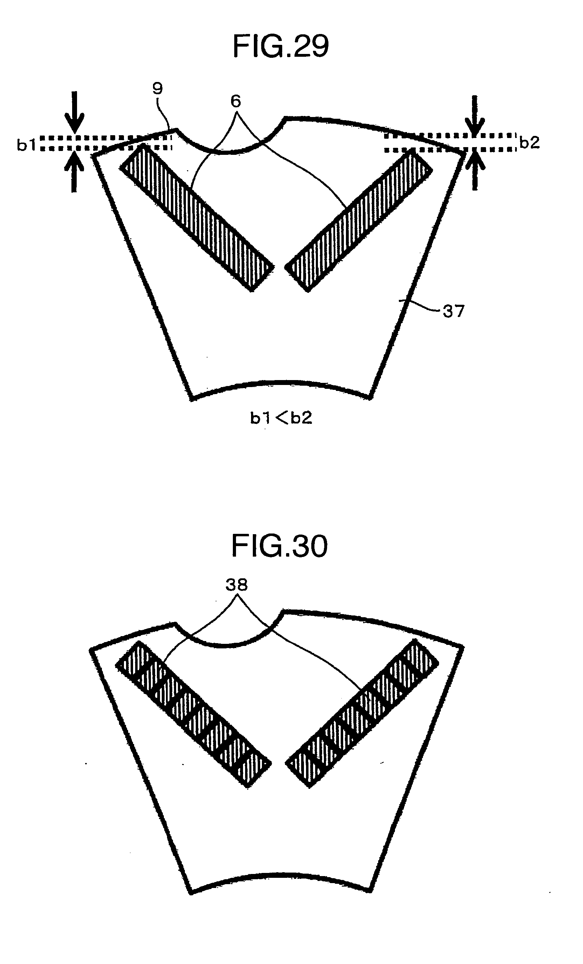

Embodiment 8 will be described below with reference to Fig. 29. Although the distances between the permanent magnet insertion hole and the rotor outer circumference (hereinafter, referred to as "bridge width") are the same in the end portion on the rotation direction side of the permanent magnet insertion hole and in the end portion on the opposite side of the rotation direction in the above embodiments, the distances may be different in the end portions on both sides. In Fig. 29, particularly a bridge width b2 on the opposite side of the rotation direction is longer than a bridge width b1 in the end portion on the rotation direction side. This is based on the consideration that the groove is provided in a position inclined toward the rotation direction in the above embodiments and therefore the weight of the rotator core is reduced on the rotation direction side and it leads to a reduction in a centrifugal force of the magnet or a stress caused by vibration applied to the bridge portion during rotation on the rotation direction side. More specifically, the bridge width b1 in the end portion on the rotation direction side is able to maintain the strength even if it is thin since the stress is reduced, and consequently, the bridge width b2 on the opposite side of the rotation direction is long relative to the bridge width b1 in the end portion on the rotation direction side, by which it is possible to keep balance in stress between the rotation direction side and the opposite side of the rotation direction.

### [Embodiment 9]

Embodiment 9 will be described below with reference to Fig. 30. In this embodiment, a divided permanent magnet 38 is inserted into one permanent magnet insertion hole. Even if the permanent magnet is divided into a plurality of parts, the same effects can be expected. Moreover, the division of the permanent magnet is also applicable to all of the following cases: various shapes of the permanent magnet insertion hole; a groove provided in the permanent magnet insertion hole; and different bridge widths. If the division is applied, the same effects can be expected as the case where the permanent magnet is not divided.

### [Embodiment 10]

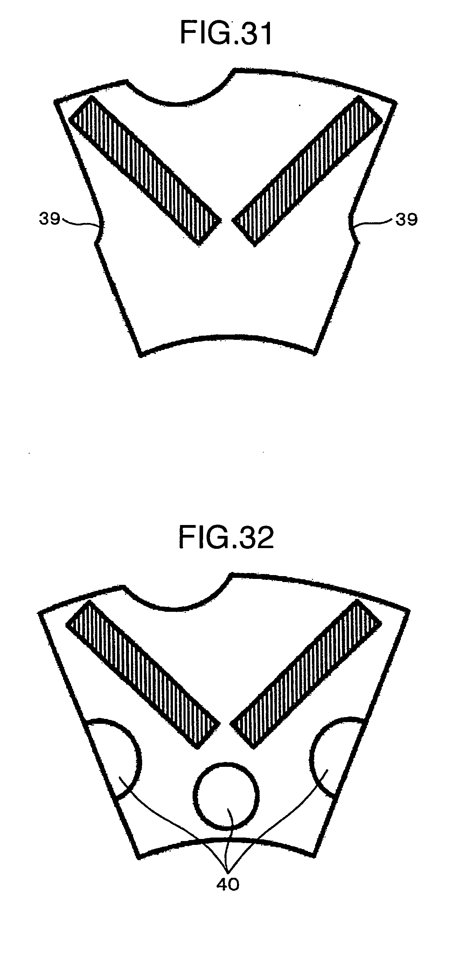

Embodiment 10 will be described below with reference to Fig. 31. The rotor may be provided with a cooling use ventilation groove. This leads to an improvement of the cooling effect of the rotor. Particularly, as in this embodiment, a cooling use ventilation groove 39 may be provided in an interpolar portion of the rotor so as to connect to a gap portion between the rotor and the stator. The provision of the cooling use ventilation groove 39 in such the position increases the cooling area in the rotor and therefore enables a reduction in the temperature of the rotor. Moreover, since the cooling use ventilation groove 39 is provided so as to connect to the gap portion between the rotor and the stator, the external wall of the cooling use ventilation groove 39 in the rotor core acts like a fan, which generates fan pressure along with rotations of the rotor and thus enables a cooling air to flow effectively from the rotor toward the stator. Therefore, it is possible to improve the cooling effect of the entire rotary electric machine including the stator. Further, even if the ventilation groove is provided in the interpolar portion of the rotor, since the portion is not located between the permanent magnet and the stator winding, it is relatively difficult for the ventilation groove to interfere with the flow of the magnetic flux in a load condition and the provision of the ventilation groove does not lead to a decrease in output.

### [Embodiment 11]

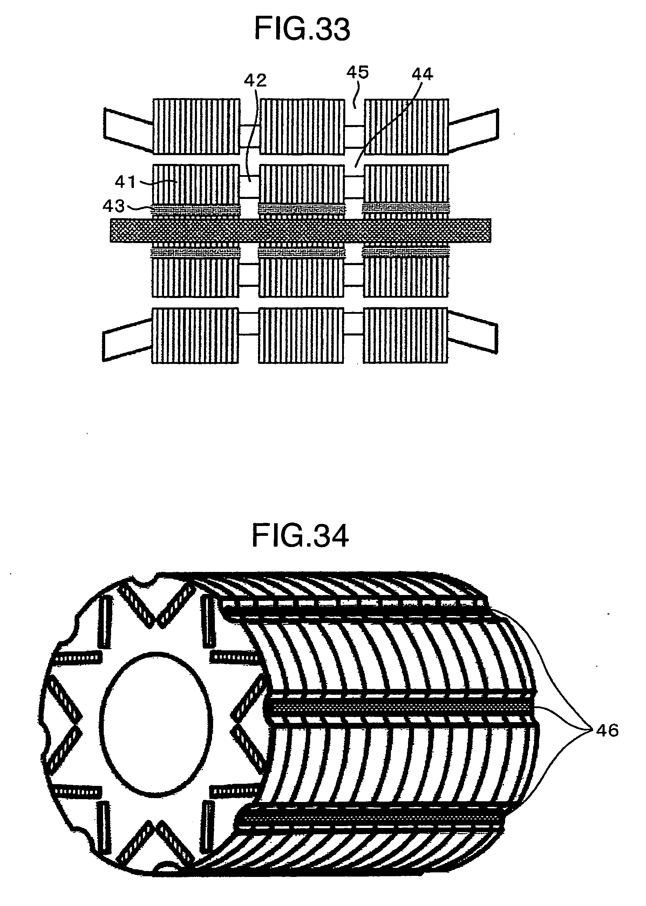

Embodiment 11 will be described below with reference to Fig. 32 and Fig. 33. Although the cooling use ventilation groove 39 is provided in the interpolar portion of the rotor so as to connect to the gap portion between the rotor and the stator in Embodiment 10, axial ducts 40 communicating in the axial direction of the rotor are provided on the radially inside with respect to the permanent magnet insertion hole in this embodiment. Moreover, as shown in Fig. 33, a duct piece 42 communicating in the radial direction of the rotor is provided between stacked rotor cores 41, whereby a duct space 44 is formed in the position corresponding to the duct piece 42 in the axial direction in the rotor. Thereby, a cooling air supplied from the fan is pushed from the duct space 44 to the outside of the rotor through the axial ducts 40, 43 of the rotor, thus enabling an improvement of the cooling capability of the rotary electric machine. Moreover, although the duct spaces 44 and 45 are formed both in the rotor and in the stator in this embodiment, the duct space may be provided only in the stator. Further, since the axial ducts 40 are provided on the radially inside of the permanent magnet in this embodiment, it is relatively difficult to interfere with the magnetic flux reaching the stator winding of the permanent magnet in a load condition and it is possible to minimize the decrease in output. In addition, the provision of the gap in the core portion enables a reduction in the weight of the rotor and the entire rotary electric machine.

### [Embodiment 12]

Embodiment 12 will be described below with reference to Fig. 34. In Embodiment 12, weld bead 46 for fixing the magnetic steel sheets which form the rotor cores is applied to the grooves 10. If the weld bead 46 is applied to the grooves 10, it is possible to reduce the eddy current flowing through the weld bead in comparison with the case where the weld bead is applied to the outer circumference portions other than the grooves of the rotor. The reason is now described below. Specifically, the magnetic flux on the rotor side and the magnetic flux on the stator side exist in the gap between the rotor and the stator, which causes a large magnetic flux variation along with rotations of the rotor, and therefore the application of the weld bead to the gap between the rotor and the stator causes an eddy current, but the providing of the weld bead on the grooves spaced apart from the gap between the rotor and the stator reduces the effect of the magnetic flux variation and therefore it is possible to reduce the eddy current. Furthermore, the application of the weld bead to the grooves of the rotor reduces an air resistance during rotation in comparison with the case where the weld bead is applied to the gap and therefore it is possible to reduce rotational energy loss, thereby enabling contribution to efficiency improvement. Although the description is made on the case of applying the weld bead to the grooves in this embodiment, it goes without saying that the same effect is achieved by applying the weld bead to the gaps.

### [Embodiment 13]

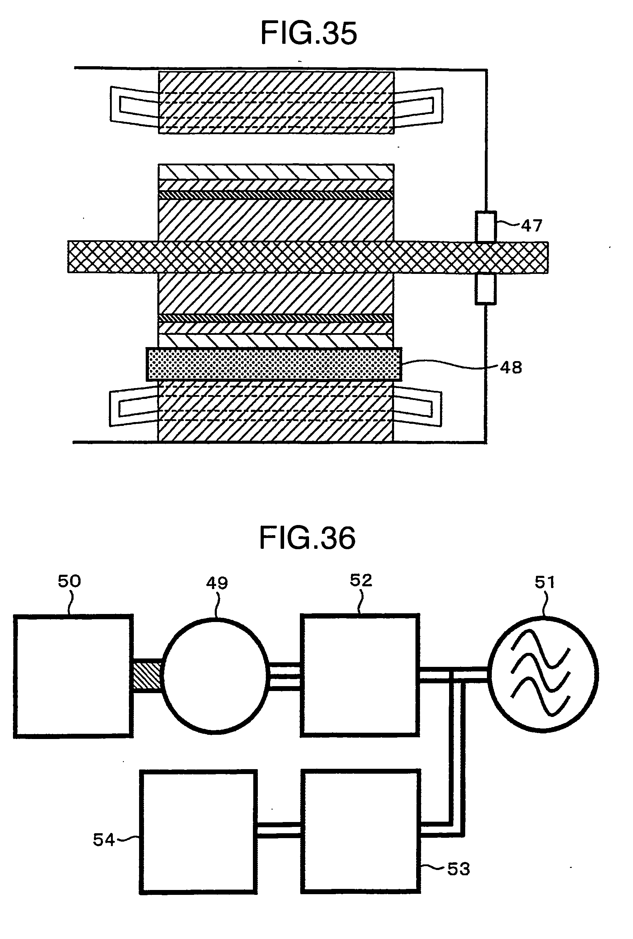

Embodiment 13 will be described below with reference to Fig. 35. In this embodiment, description will be made on a method of manufacturing, a method of repairing, and a method of transporting the rotary electric machine described in the above embodiments. This embodiment is described with an example of a rotary electric machine having a bearing 17 for the rotating shaft only on one side. In this case, the rotary electric machine according to each of the above embodiments is provided with the grooves in the outer circumference of the rotor, and therefore it is possible to insert a guide 48, which is a support member, into the grooves or gaps. Here, for the guide 48, it is preferable to use a non-magnetic material. It is because, if a magnetic guide is used, the guide is attracted to the magnetic force of the permanent magnets, which makes it difficult to insert and extract the guide. The insertion of the guide into the grooves fixes the rotor, thereby enabling prevention of rotations of the rotor and prevention of a contact between the rotor and the stator during manufacturing or transportation of the rotary electric machine. Specifically, if the rotary electric machine is manufactured, repaired, or transported with the guide 48, particularly made of non-magnetic material, inserted in the grooves, there is no need to particularly provide any other structure for fixing the rotor, which makes it possible to use the existence of the grooves effectively. Also in the case of a rotary electric machine having bearings on both sides, this embodiment is applicable when both sides are not sealed such as during manufacturing or repairing.

### [Embodiment 14]

Embodiment 14 will be described below with reference to Fig. 36. In this embodiment, the rotary electric machine according to each of the above embodiments is applied to an engine-motor hybrid-drive vehicle system. In this embodiment, a rotary electric machine 49 is connected to an engine 50 and placed in a vehicle power car. The rotary electric machine 49 is connected to an electric power system 51 via an electric power converter 52 and is able to perform a generating operation. Moreover, a battery 54 is connected to a portion between the electric power system 51 and the electric power converter 52 via a battery chopper 53. Since it is able to reduce the no-load induced electromotive force in this embodiment,, as described in the foregoing embodiments, this embodiment has a merit particularly in a reduction of risk exceeding the upper limit voltage of the electric power converter 52.

### [Embodiment 15]

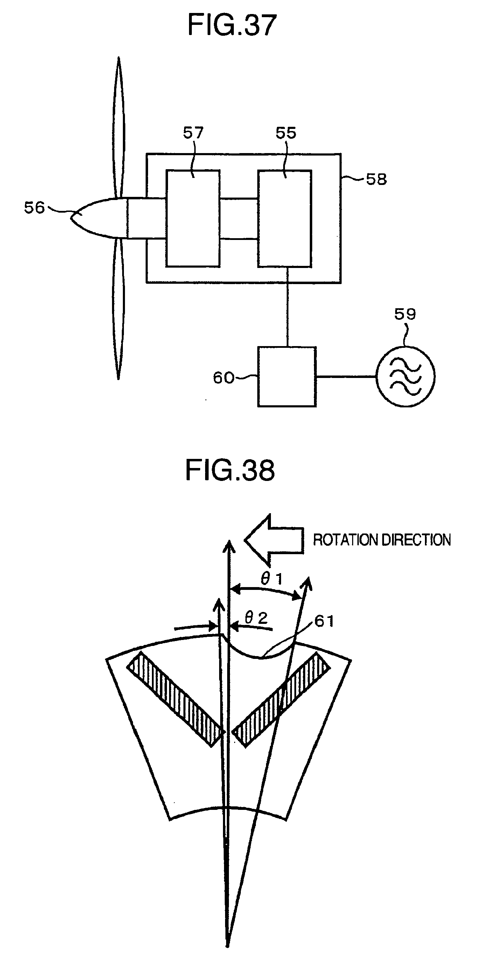

Embodiment 15 will be described below with reference to Fig. 37. In this embodiment, there is shown an example of applying the rotary electric machine according to each of the above embodiments to a wind turbine generator system. In this embodiment, a rotary electric machine 55 is connected to blades 56 via a change gear 57, and the rotary electric machine 55 and the change gear 57 are housed in a nacelle 58. In addition, the rotary electric machine 55 is connected to an electric power system 59 via an electric power converter 60. Since it is able to reduce the no-load induced electromotive force in this embodiment, as described in the foregoing embodiments, this embodiment has a merit particularly in a reduction of risk exceeding the upper limit voltage of the electric power converter 60. Moreover, since this embodiment enables suppression of vibration, it is possible to provide a wind turbine generator system which is low-noise and low-load on the change gear 57. Although the wind turbine generator system has been typically described in this embodiment, in addition, this embodiment is applicable to a water wheel, an engine, a turbine or the like. Moreover, the rotary electric machine 55 is also able to be directly connected to the blades 56 without passing through the change gear 57.

### [Embodiment 16]

Embodiment 16 will be described below with reference to Fig. 38. Although the rotary electric machine has been mainly described by giving an example of an electric generator in the foregoing embodiments, the present invention is also applicable to a motor. Therefore, description will be made on the position of a groove 61 for a case where the rotary electric machine is applied to the motor. The details other than the position of the groove 61 may be the same as those of the electric generator. As for the position of the groove 61 when the rotary electric machine is applied to the motor, it is required to provide the groove 61 on the opposite side of the rotation direction. It is because, while the magnetic flux, as a combination of the magnetic flux generated by applying electric current to the stator winding and the magnetic flux generated from the permanent magnets, is generated on the opposite side to the rotation direction in the case of the electric generator, the magnetic flux, as a combination of the magnetic flux generated by applying electric current to the stator winding and the magnetic flux generated from the permanent magnets, is generated on the rotation direction side in the case of the motor. Except for that the position of the groove 61 is opposite to the rotation direction, the contents described in the above embodiments are similarly applicable to those of the motor.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A rotary electric machine comprising:
a rotor (1) which has permanent magnets (7, 8, 20 - 22, 24, 28) inserted in permanent magnet insertion holes (6) provided in a rotor core for each magnetic pole head of the rotor core; and
a stator (2) which is disposed on a radial outside so as to be opposed to the rotor,
wherein a groove (10, 29 - 34, 61) or gap is provided in the rotor core on a radial outside (9) with respect to the permanent magnets and the groove or gap is provided in a position inclined from a centerline (11) between the permanent magnets within the magnetic pole head and at the same time in a position excluding end portions of the permanent magnet insertion holes on a radial outside.

2. The machine according to claim 1, wherein the groove or gap (10, 29 - 34, 61) is provided in a position inclined toward the rotation direction from the centerline (11) between the permanent magnets and at the same time in a position excluding the end portions of the permanent magnet insertion holes on the radial outside.

3. The machine according to claim 1, wherein the groove or gap (10, 29 - 34, 61) is provided in a position inclined toward an opposite side of the rotation direction from the centerline between the permanent magnets and at the same time in the position excluding the end portions of the permanent magnet insertion holes on the radial outside.

4. The machine according to claim 2 or 3,
wherein an angle α formed by an end portion (12) of the groove or gap (10, 29 - 34, 61) on an opposite side of the rotation direction and a centerline (11) between the permanent magnets within a magnetic pole head is smaller than an angle β formed by an end portion (13) of the groove or gap on a rotation direction side and the centerline (11) between the permanent magnets within the magnetic pole head, and the angle α is less than 10, 29 - 34, 61 °.

5. The machine according to any one of claims 2 to 4,
wherein an angle α formed by an end portion (12) of the groove or gap (10, 29 - 34, 61) on an opposite side of the rotation direction and a centerline (11) between the permanent magnets within a magnetic pole head is smaller than an angle β formed by an end portion (13) of the groove or gap (10, 29 - 34, 61) on a rotation direction side and the centerline (11) between the permanent magnets within the magnetic pole head, and the angle P is less than 55°.

6. The machine according to any one of claims 2 to 5, wherein the rotation direction of the rotor is a defined direction and the entire position of the groove or gap (10, 29 - 34, 61) in the circumferential direction and the axial direction is deflected toward the rotation direction, rather than toward the opposite side in the rotation direction, relative to the centerline between the permanent magnets.

7. The machine according to any one of claims 2 to 6, wherein a distance between the permanent magnet insertion hole and the rotor core outer circumference (9) on the opposite side of the rotation direction is longer than the distance on the rotation direction side.

8. The machine according to any one of claims 1 to 7, wherein a non-magnetic support member is inserted in the groove or gap (10, 29 - 34, 61).

9. The machine according to any one of claims 1 to 8, wherein the permanent magnet is divided into a plurality of parts.

10. The machine according to any one of claims 1 to 9, wherein a plurality of said grooves or gaps (10, 29 - 34, 61) are provided.

11. The machine according to any one of claims 1 to 10, wherein the end portion of the permanent magnet insertion hole on the radial outside is formed in an arcuate shape.

12. The machine according to any one of claims 1 to 10, wherein the end portion of the permanent magnet insertion hole on the radial outside is substantially parallel to the outer circumference of the rotor.

13. The machine according to any one of claims 1 to 12, wherein an interpolar portion of the rotor is provided with a ventilation groove, which connects to a gap between the rotor and the stator.

14. The machine according to any one of claims 1 to 13, wherein a ventilation groove communicating in the axial direction of the rotor is provided in the rotor core on a radially inside with respect to the permanent magnet insertion holes.

15. The machine according to any one of claims 1 to 14, wherein the rotor is formed uniformly in the same shape over an entire length in the axial direction.

16. The machine according to any one of claims 1 to 15, wherein a member for fixing the rotor cores constituting the rotor is applied to the groove or gap (10, 29 - 34, 61).

17. The machine according to any one of claims 1 to 16, wherein a depth (d) of the groove (10, 29 - 34, 61) is less than 5% relative to a radial distance from a shaft center of the rotor to the rotor outer circumference.
